# EUROPEAN PATENT SPECIFICATION

(11) **EP 2 030 879 B1**
(45) Date of publication and mention of the grant of the patent: **20.01.2010**
(21) Application number: 07017227.5
(22) Date of filing: 03.09.2007
(51) Int. Cl.: B62J 1/12, B62H 5/00

(54) **A seat assembly for a motorcycle and a motorcycle equipped with such a seat assembly**
Sitzanordnung für ein Motorrad und mit einer solchen Sitzanordnung ausgestattetes Motorrad
Ensemble de siège pour motocyclette et motocyclette équipée d'un tel ensemble de siège

(43) Date of publication of application: 04.03.2009
(73) Proprietor: Yamaha Motor Research & Development Europe s.r.l., 20050 Gerno di Lesmo (MI) (IT)
(72) Inventor: Tishiharu, Shigeta, 20148 Milano (IT); Locati, Claudio, 20043 Arcore (MI) (IT)
(74) Representative: Grünecker, Kinkeldey, Stockmair & Schwanhäusser Anwaltssozietät

(56) References cited:
- EP-A- 0 726 195
- US-A- 5 533 783
- US-A1- 2006 180 373
- US-A1- 2006 180 385

## Description

The present invention relates to the field of motorcycles. In particular the present invention relates to a seat assembly for a motorcycle and a respective motorcycle equipped with such a seat assembly.

It is well-known in the field of motorcycles that beside crucial mechanical components or parts such as, for instance, gear, engine or the like, or even electrical equipments, also other accessories play a relevant role and have to be taken into consideration during design of the motorcycle. In fact, said accessories, even if apparently not crucial for the overall performances of the motorcycle can negatively or positively influence said performances, depending thereon whether these accessories have been designed properly and perfectly match the motorcycle or other components thereof. Further, said accessories may effect the comfort of the driver and/or passenger during traveling. In turn, other accessories may render it comfortable or troublesome preparing the motorcycle for the next trip, depending thereon whether said accessories allow exploitation of the different purposes for which they have been provided. The seat of the motorcycle belongs to these apparently, non-crucial accessories. It is in fact well-known that its shape and dimension may influence the comfort of the driver or passenger; if for instance the driver does not feel comfortable during traveling with the motorcycle, this could lead to wrong driving maneuvers, which could lead to either bad or even drastic consequences. On the other hand, if comfort of the driver or passenger was the unique criteria or requirement taken into account during design of the seat, so that a large seat surface is offered or put at the disposal of the driver or passenger, the resulting seat may become too big or cumbersome or bulky, so that the overall aerodynamic or even the overall appearance of the motorcycle may be negatively effected. Therefore, a balance has to be found between comfort, aesthetic and aerodynamic requirements. It is also common nowadays to use the space under the seat for housing or storing tools or even pieces of clothing which could be needed during traveling or even for the daily maintenance operations. The question therefore arises as to how much space has to be left under the seat for putting away said tools or pieces of clothing or the like without negatively effecting the appearance, look or even aerodynamics of the motorcycle. In particular, in the case of high speed or high performance motorcycles, only a small space is usually left under the seat for obvious reasons so that it may be difficult to locate even a few small essential tools under the seat. Moreover, in such cases in which the space under the seat is used for one or more of the purposes identified above, the further question arises, which type of closing or locking means should be provided, in order to allow the driver or passenger to open the seat as soon as the need arises to gain access to the space under the seat for housing or storing tools or the like or even for picking up same from the space under the seat. It should in fact be insured that opening the seat does not become difficult, troublesome or time-consuming, otherwise the driver or passenger would refrain from using the space under the seat, resulting in this space becoming useless. The same considerations as stated above also apply to the operation needed for closing the seat. Whilst several locking means may be in principle implemented, the choice of the locking means should be made taking into consideration security requirements, in particular which guarantee should offer the selected locking means to avoid the theft, or even picking the lock. In fact, if on the one hand, very big or bulky locking means offer adequate guarantees in this sense, said big or bulky locking means would not meet other requirements such as, reduced weight, comfort for the driver or passenger or even managing (locking and unlocking, respectively) of said locking means. Even finding an adequate location for said locking and unlocking means revealed to be a difficult task for the motorcycle industry, since the location or position of said locking and unlocking means may effect the comfort of the driver or passenger or even their function. Last, but not least, once the space under the seat is used for recovering tools or other equipments or accessories, it has to be ensured that said tools do not move or move as little as possible during traveling, for instance due to vibrations or the like, otherwise the resulting noise could become annoying for the driver or passenger.

In an attempt to meet as many as possible of the criteria and/or requirements outlined above, several solutions relating in particular to seat assemblies have been proposed in recent years by the manufacturers of motorcycles. For instance, solutions have been suggested according to which a seat element is provided, with said seat element being hinged at one end to the frame or chassis of the motorcycle; however, these solutions have the drawback that said hinged seat element tends to fold back to the closed position accidentally, so that the driver or passenger is obliged to keep said seat element in its open position by using one hand, whilst only the second hand of the driver or passenger may be used for putting away or picking up tools or the like from the space under the seat. Furthermore, it has to be noted that the hinging systems are usually bulky and cumbersome so that only a reduced space may be used for recovering tools or the like. Other drawbacks effecting the hinged seat elements relate to the fact that these are usually hinged at an end portion thereof facing towards the rear of the motorcycle; accordingly, the locking means has to be located at the opposite one end portion (facing toward the front of the motorcycle). However, this location of the locking/unlocking means revealed often to be annoying for the driver or passenger. To overcome this further drawback, alternative solutions were proposed, according to which the locking/unlocking means are adapted to be actuated from the side (left or right) of the motorcycle; however, also in doing so, space for housing said locking/unlocking means has to be provided under the seat, said space being taken away from the space for recovering tools or the like. Furthermore, actuating the locking/unlocking means from the side of the motorcycle often revealed to be very difficult or annoying for the driver or passenger.

Therefore, it results from the above that in spite of all the efforts made, the solutions previously proposed and known in the prior art do not meet all the essential requirements which have to be taken into consideration during the design of a motorcycle. In particular the proposed solutions do not meet the needs of a seat assembly offering comfort to the driver, being simple to be alternatively open and closed, offering adequate space for recovering tools or the like and matching the overall design of the motorcycle so as to not negatively influence its aerodynamics.

Further examples of prior art seat assemblies for motorcycles can be found in each of documents US2006180373, US2006180385, US5533783 and EP0726195.

Accordingly, in view of the above, it is an object of the present invention to provide a seat assembly for a motorcycle and a motorcycle, in particular a motorbike, by means of which adequate performances in terms of seating comfort, aerodynamics, functionality and space for recovering tools or the like is offered.

In general terms, the present invention in based on the consideration that the problems affecting the prior art seat assemblies may be overcome by providing a seat assembly comprising a seat element adapted to be alternatively locked to and removed from said motorcycle. A further consideration on which the present invention is based relates to the fact that many of the criteria or requirements stated above may be met by providing a seat assembly with a seat element, wherein said seat element comprises connecting means adapted to be connected to a predefined portion of said motorcycle, said connecting means being disposed in the front end portion (facing toward the front of the motorcycle once said seat element has been connected to said motor cycle) of said seat element. Still a further consideration on which the present invention is based relates to the fact that very good comfort for the driver or passenger may be achieved by providing said seat element with locking/unlocking means adapted to be actuated from above said seat element so that said seat element can be alternatively locked to and removed from said motorcycle. Moreover, further advantages are achieved by disposing said locking/unlocking means in the rear end portion (facing towards the rear of the motorcycle once said seat element has been mounted thereto) of said seat element.

On the basis of the considerations as stated above, the above objectives are solved by the features of claims 1 and 20.

Further, preferred embodiments of the present invention are laid down in the dependent claims.

Further advantages, objects and features as well as embodiments of the present invention are defined in the appended claims and will become more apparent with the following detailed description when taken with reference to the accompanying drawings, in which identical corresponding parts are identified by the same reference numerals. In particular, in the drawings:
Figure 1 relates to a schematic side view of a motorcycle equipped with a seat assembly according to the present invention;
Figure 2 relates to a schematic top view of the motor cycle of Figure 1 equipped with a seat assembly according to the present invention.;
Figure 3 relates to a schematic top view of a detail of the motorcycle of Figures 1 and 2 wherein the seat element of the seat assembly according to the present invention has been removed;
Figure 4a relates to an enlarged schematic view of a seat element belonging to a seat assembly according to the present invention;
Figures 4b and 4c relate to corresponding schematic enlarged views of a portion of the frame of a motorcycle adapted to be equipped with a seat assembly according to the present invention, said portion of said frame being adapted to cooperate with the seat assembly of the present invention;
Figures 5a and 5b relate to corresponding schematic bottom views of a seat element of the seat assembly according to the present invention;
Figure 5c relates to a schematic enlarged view of further details of the seat element of Figures 5a and 5b.

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but rather the described illustrative embodiments merely exemplify the various aspects and features of the present invention, the scope of which is defined by the appended claims.

The present invention is understood to be of particular advantage when applied to two-wheeled motorcycles, such as, for instance, motorbikes. For this reason, examples will be given in the following, in which corresponding embodiments of the seat assembly according to the present invention are applied to motorbikes. However, it has to be appreciated that the applications of the seat assembly according to the present invention are not limited to the case of motorbikes. On the contrary, the seat assembly according to the present invention may also be applied to other motorcycles and/or motor vehicles, in particular to three or even four-wheeled motorcycles such as for instance, "choppers", quads or the like.

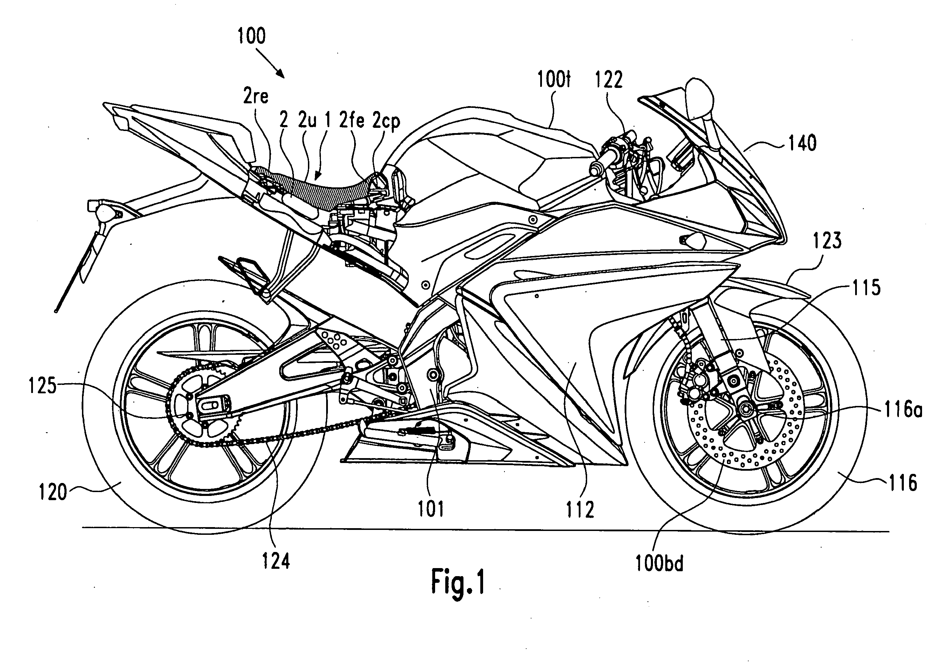

In the following, some details and features of the seat assembly according to the present invention will be described with reference to Figure 1.

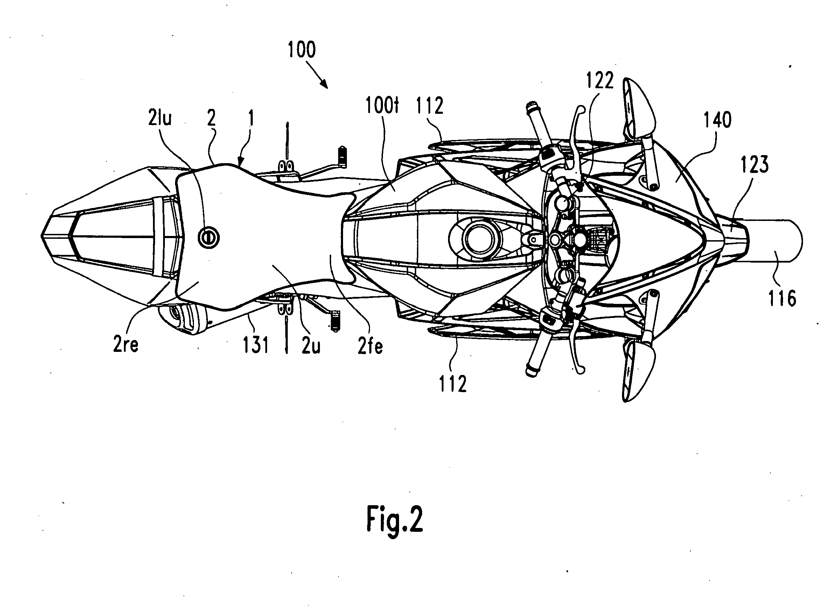

In Figure 1, a motorcycle 100 is depicted. Although some portions or component parts common to usual motorcycles have been omitted in Figure 1 for the sake of clarity, the essential features of common motorcycles have been depicted in Figure 1 and relate in particular to a fuel tank 100t adapted to be filled with fuel. Side covering elements 112 are mounted to the motorcycle 100 on opposite sides thereof (see also Figure 2); components of the motorcycle such as, for instance, the engine, the crankcase, the cylinder or the like have therefore to be understood as being located in the area defined by said side covering elements 112 in combination, and therefore, as being located behind the right side cover element 112 depicted in Figure 1. A front cowling element 140 is mounted to the motorcycle 100 at the front end portion thereof, with said front cowling element 140 comprising and/or supporting components such as, for instance, headlights, front direction indicators, rear mirrors, a speedometer or the like. A front wheel 116 comprising a brake disk 100bd is supported by a front fork 115, with said front wheel 116 being attached to said front fork 115 by means of a front axle 116a.

The motorcycle 100 depicted in Figures 1 and 2 further comprise a rear wheel 120 with a sprocket 125, a chain 124 being further provided to transmit driving force to the rear wheel 120 through the rear sprocket 125. Still in Figure 1, reference numerals 122 identifies a handle bar provided with brake handles and corresponding cables extending there from. Moreover, reference numerals 123 identifies a front fender provided to avoid the motorcycle 100 and the driver and/or passenger being splashed with mud. Reference numeral 131 (see also Figure 2) identifies a silencer belonging to an exhaust gas purifying apparatus extending from the cylinder to the rear of the motorcycle (therefore, being partially covered in Figure 1 by the right side cover element 112). A seat assembly 1 is further provided, with said seat assembly being located behind the fuel tank 100t. Said seat assembly 1 comprises a seat element 2 mounted to the motorcycle 100 and comprising an upper seat surface 2u for a driver or passenger of the motorcycle 100. Finally, the motorcycle 100 of Figure 1 comprises an engine identified in Figure 1 by the reference numeral 101, with further features or component parts of said engine 101 being covered in Figure 1 by the right side cover element 112.

As anticipated above some usual component parts and/or features of common motorcycles have not been depicted in Figure 1 for the sake of clarity; the features not depicted may relate for instance to a rear cushion, rear fender, a speed reducer, details of the engine and/or crankcase or even the cylinder, rear direction indicators or the like. Even if not strictly essential to the present invention, these omitted features and/or their equivalents have to be considered as being comprised in the motorcycle as depicted in Figure 1.

As apparent from Figure 1, the seat assembly 1 of the present invention, in particular the seat element 2 thereof is located behind the fuel tank 100t of the motorcycle 100 depicted therein. In particular, the seat element 2 comprises a front end portion 2fe and a rear end portion 2re, with said front end portion 2fe facing towards the front of the motorcycle 100 (in particular toward the fuel tank 100t thereof), whilst said rear end portion 2re faces towards the rear of the motorcycle 100 once said seat element 2 has been mounted to said motorcycle 100 as depicted in Figure 1. Furthermore, it appears from Figure 1 that the seat element 2 of the seat assembly 1 depicted therein comprises an upper seat surface 2u allowing a driver and or passenger to sit on the motorcycle 100. Moreover, in Figure 1 there is depicted a protruding portion 2cp of the seat element 2; as it will become apparent from the following disclosure, said protruding portion 2cp belongs to connecting means 2c of said seat element 2 allowing, in cooperation with locking/unlocking means of said seat element 2 to be described in the following, said seat element 2 to be alternatively fixed to and removed from the motorcycle 1.

In the following, some further details of the seat assembly 1 according to the present invention, in particular of the seat element 2, will be described with reference to Figure 2 wherein features of said seat assembly or even of the motorcycle depicted therein already described with reference to Figure 1 are identified in Figure 2 by the same reference numerals.

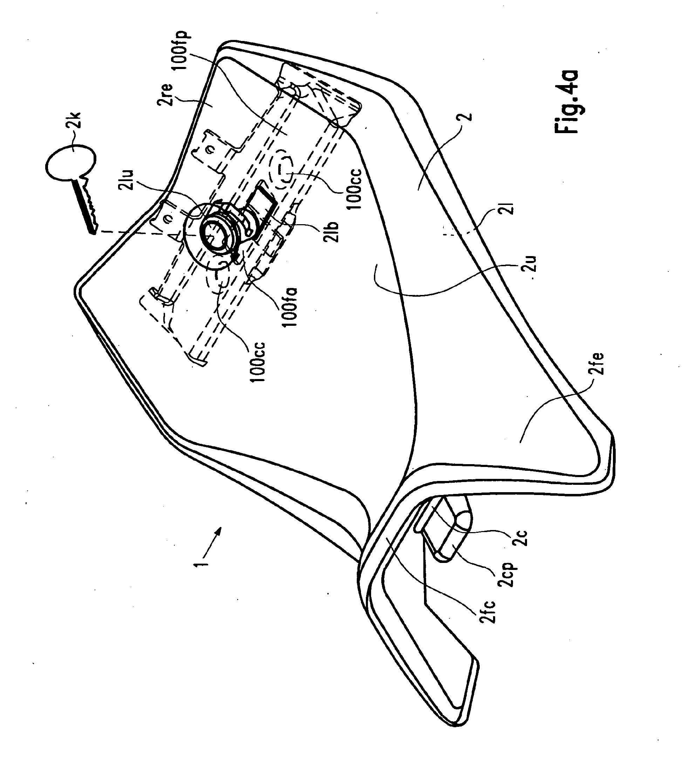

When looking at Figure 2 it may be appreciated that the seat element 2 of the seat assembly 1 depicted therein comprises locking/unlocking means 2lu adapted to be operated, for instance by means of a key (see in particular the following disclosure relating to Figure 4a), said locking/unlocking means 2lu being adapted to be actuated from above the upper surface 2u of the seat element 2. Moreover, said locking/unlocking means 2lu are located in the rear end portion 2re of the seat element 2. The fact that the locking means 2lu may be actuated from above the upper surface 2u of the seat element 2, together with the fact that said locking/unlocking means are located in the rear end portion 2re of said seat element offers the following advantages with respect to prior art seat assemblies. Firstly, said locking/unlocking means 2lu may be operated easily and quickly also in difficult conditions such as, for instance, during the night, by darkness or the like. The driver or passenger is in fact not forced to look for this locking/unlocking means as it would be the case if same would be located at another position, for instance on the side of said seat element 2. Moreover, evident advantages are offered in terms of comfort for the driver or passenger sitting on the motorcycle 100, in particular on the seat surface 2u of the seat element 2. It has in fact to be noted that the usual position of the driver or passenger sitting on a motorcycle of the kind depicted in Figure 1 is that in which said driver or passenger seats close to the fuel tank 100t, with his stomach or chest almost lying on said fuel tank 100t. Therefore, it may be appreciated that the most pressure exerted by the driver or passenger sitting on the motorcycle 100 due to his weight is exerted rather on the front end portion 2fe of the seat element 2 and less on the rear end portion 2re of said seat element 2. Accordingly, if the locking/unlocking means 2lu would be located in the front end portion 2fe of the seat element 2 (as it is the case in most of the prior art seat assemblies) the driver or passenger sitting on the seat element 2 could become annoyed by the locking/unlocking means, thus resulting in the comfort of said driver or passenger being negatively effected with corresponding evident disadvantages in terms of driving safety or security. On the contrary, with the locking/unlocking means 2lu being located in the rear end portion 2re of the seat element 2 as depicted in Figure 2, the comfort of the driver or passenger is improved along with his safety and/or security. The shape of the front end portion 2fe of the seat element 2 may be selected or designed according to the exigencies and/or circumstances; for instance, said shape may be designed so as to match with the shape of the fuel tank 100t as depicted in Figure 2.

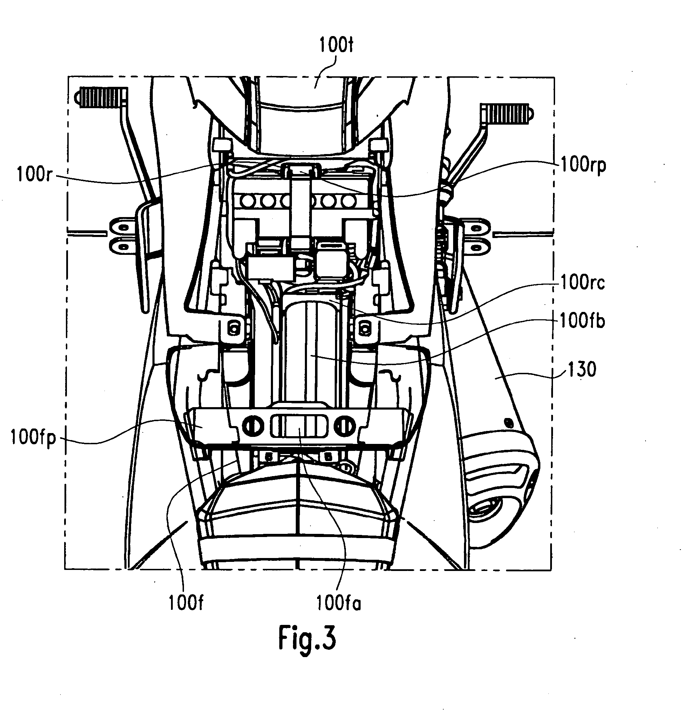

In the following, with reference to Figure 3 and 4a, further features and/or details of the seat assembly according to the present invention will be described; as usual, in Figures 3 and 4a, those features which have already been described above with reference to previous figures are identified by the same reference numerals.

When looking at Figure 4a, some features of the seat element 2 depicted therein may be immediately appreciated; it appears for instance from Figure 4a that the front end portion 2fe of the seat element 2 depicted therein comprises a curved front portion 2fc having substantially the shape of a reverse C or a reverse U. It is said curved front portion 2fc which matches with the fuel tank 100t once the seat element 2 is mounted or fixed to the motorcycle 100 as depicted in figures 1 and 2. In the area below or under the front curved portion 2fc, the seat element 2 comprises connecting means 2c with a protruding connecting portion 2cp; the purpose of said protruding portion 2cp is that of allowing the seat element 2 to be mounted on the motorcycle 100 as depicted in Figure 1. To this end, said protruding portion 2cp is adapted to cooperate with a corresponding receiving or fixing portion100r of said motorcycle 100. In particular, according to the exigencies and/or circumstances, said receiving portion 100r may be defined either by the frame or a portion thereof or even by the fuel tank 100t (see also Figure 3). In more details, said receiving portion 100r comprises a recess or cavity 100rp adapted to receive said protruding portion 2cp of said seat element 2; said cavity or recess 100rp will therefore have shape and dimensions matching the shape and dimensions of said protruding portion 2cp, wherein the shape and dimensions of both said protruding portion 2cp and the corresponding cavity or recess 100rp may be selected or designed according to the exigencies and/or circumstances.

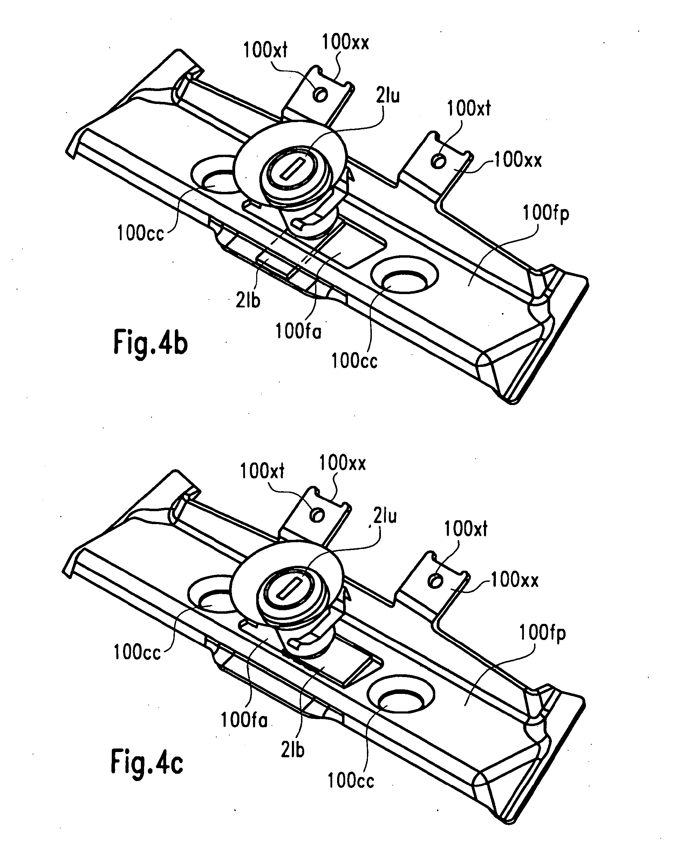

In Figure 3 there is depicted the portion of the motorcycle 100 located behind the fuel tank 100t; this portion of the motorcycle 100 is at least partially covered by the seat element 2 depicted in Figure 4a, once said seat element 2 has been mounted to the motorcycle 100 as depicted in Figures 1 and 2. In Figure 3 it may be in particular identified the main frame 100f of the motorcycle 100, along with a portion 100fp of said main frame 100f; this portion 100fp of the main frame 100f (also depicted in Figure 4a in dashed lines) is adapted to cooperate with the locking/unlocking means 2lu of the seat element 2 as follows. As apparent from Figurer 4a, the locking/unlocking means 2lu depicted therein are adapted to be operated from above the seat surface 2u of said seat element 2, for instance by means of a key 2k or the like. Said locking/unlocking means 2lu comprises a rotatable element from which a corresponding rotatable locking/unlocking bolt 2lb extends, said locking/unlocking bolt 2lb being adapted to be rotated by means of the key 2k between a first unlocked position (depicted in Figure 4a in continuous lines) and a second locking position (depicted in Figure 4a in dashed lines). On the other hand, the corresponding portion 100fp of the main frame 100f comprises, as apparent from Figure 3, a rectangular through aperture 100fa. In its unlocking position the locking/unlocking bolt 2lb of the locking/unlocking means 2lu is allowed to pass through said aperture 100fa; on the contrary, in its locking position, depicted in dashed lines in Figure 4a (see also Figure 4b) said locking bolt 2lb of said locking/unlocking means 2lu is not allowed to pass through said aperture 100f a.

The way and operations according to which the seat element 2 of the seat assembly 1 of to the present invention may be mounted and locked to the motorcycle 100 are as follows. Firstly, the protruding portion 2cp of the connecting means 2c of the seat element 2 is introduced into the corresponding cavity or recess 100rp of the receiving portion 100r defined, as stated above, by the frame 100f or by the fuel tank 100t of the motorcycle 100. To this end the seat element 2 may be kept, if the need arises or in order to render it easy to introduce the protruding portion 2cp into the corresponding cavity or recess 100rp, slightly inclined i.e. with the rear portion 2re of the seat element 2 being kept at a higher position than the front end portion 2fe of the seat element 2. Once the protruding portion 2cp of the seat element 2 has been at least partially introduced into the corresponding receiving cavity or recess 100rp, the rear end portion 2re of the seat element 2 may be lowered till to come close to the portion 100fp of the main frame 100f of the motorcycle 100. If needed, the rotatable bolt 2lb of the locking/unlocking means 2lu is rotated into its unlocking position as depicted in continuous lines in Figure 4a; lowering the rear end portion 2re of the seat element 2 until said rear end portion comes close to the frame 100f or the portion 100fp thereof, also allows the protruding portion 2cp of the seat element 2 to come to its end position inside its corresponding receiving cavity or recess 100rp. With the bolt 2lb in its unlocking position, the rear portion 2re of the seat element 2 may be further lowered, in particular until the lower surface 2l of said seat element 2 comes into abutment with the portion 100fp of the frame 100f so as to allow the locking bolt 2lb to pass through the aperture 100fa of the portion 100fp of the frame 100f. Successively, the locking bolt 2lb is rotated by means of the key 2k so as to reach its locking position depicted in dashed lines in Figures 4a and 4b. In this way, the seat element 2 is firmly fixed and locked to the motorcycle 100 and can only be removed from the motorcycle 100 by first turning or rotating the locking bolt 21b back to its unlocking position by means of the key 2k.

Removing the seat element 2 from the motorcycle 100 may be exploited as follows.

Firstly, the locking bolt 2lb is rotated to its unlocking position by means of the key 2k so as to be allowed to pass through the aperture 100fa of the portion 100fp of the frame 100f; successively, the rear end portion 2re of the seat element 2 is lifted so that the locking bolt 2lb passes through the aperture 100fa. Finally, the rear portion 2re and the overall seat element 2 are lifted, displaced or both so as to remove the protruding portion 2cp of the connecting means 2c of the seat element 2 from the corresponding cavity or recess 100rp.

It results therefore, from the above that alternatively mounting and removing or even alternatively locking and unlocking the seat element 2 to and from the motorcycle 100 (in particular to and from the frame 100f) results to be very simplified with respect to other seat assemblies known in the prior art. In fact, since the seat element 2 can be completely removed and detached from the motorcycle 100 the problems affecting the prior art seat assemblies comprising a seat element hinged to the motorcycle are avoided because it is avoided that said seat element becomes accidentally closed. Moreover, and still because the seat element of the seat assembly according to the present invention may be completely detached or removed from the motorcycle, the access to the portion of the motorcycle below the seat element or to components or accessories stored below the seat element 2 also results to be more easy and quicker. The access to the portion or area of the motor cycle below the seat element 2 is in fact not obstructed or rendered troublesome by the seat element as is the case with seat elements hinged to the motorcycle. In particular, this aspect has revealed to be of great relevance since, as it will be explained below, opening the seat element or removing it from the motorcycle is carried out often, due to the fact that tools or clothes or the like are usually arranged below the seat element. It appears in fact from Figure 3 that a receiving portion 100rc, is provided under the seat element 2 for the purpose of allowing accessories, for instance a tool bag 100fb or even other elements and/or accessories not depicted in Figure 3, to be stored or put away in said receiving portion 100rc. As apparent from the following description as given with reference to further drawings, the seat element 2 according to the invention is allowed to avoid the tools or accessories received in the receiving portion 100rc to move or to be displaced during use or the driving of the motorcycle, which could otherwise result in an annoying noise being generated.

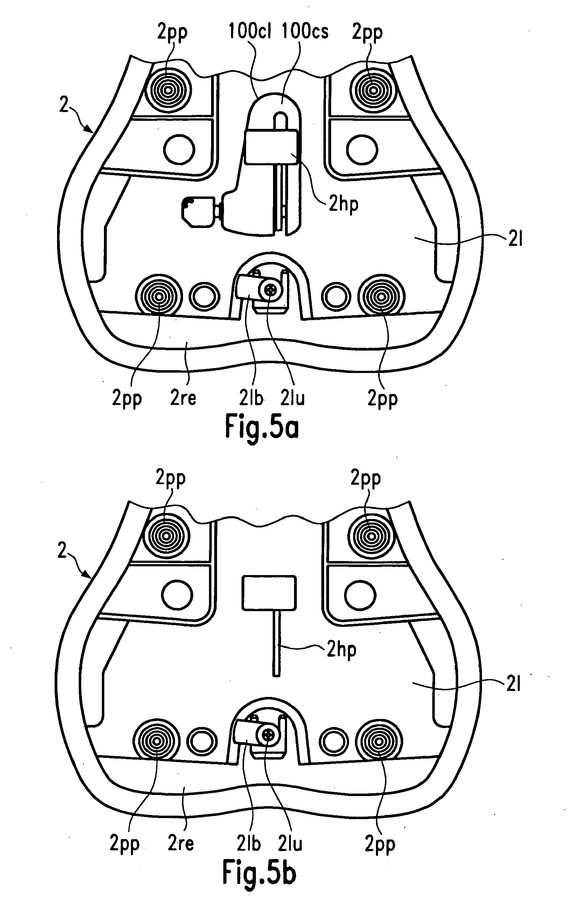

In the following, with reference to Figures 4b, 4c, 5a and 5b further features and details of the seat assembly according to the present invention will be described; again, in Figures 4b, 4c, 5a and 5b, those features depicted therein and already described with reference to previous figures are identified by the same reference numerals.

When looking at Figures 4b and 4c, it appears that the portion 100fp depicted therein of the main frame 100f comprises connecting or fixing elements 100xx adapted to fix said portion 100fp to the main frame 100f. In particular, according to the embodiment depicted in Figures 4b and 4c, said fixing elements 100xx comprise corresponding apertures 100xt adapted to receive screwing means such as, screws or the like; in this way, the portion 100fp may be fixed to the main frame 100f by means of said screwing means and removed therefrom when the need arises. However, other embodiments falling within the scope the scope of the present invention are also possible, according to which the portion 100fp may be for instance permanently fixed to the main frame 100f; for instance, to this end, the fixing elements 100xx or even other parts of the portion 100fp may be welded to the main frame 100f. Two recesses or cavities100cc are also depicted in Figures 4b and 4c, with said cavities or recesses 100cc having a truncated conical shape and being adapted to receive corresponding pins 2pp extending from the lower surface 2l of the seat element 2 (see in particular 5a and 5b). The purpose of said recesses or cavities 100cc and said corresponding protruding pins 2pp is that of allowing the seat element 2 to be firmly kept in its locked position and to minimize any eventual displacement of said seat element 2 once it has been locked in its locked position. Of course, the pins 2pp also have a substantially truncated conical shape so as to match with the substantially truncated concical shape of the corresponding cavities or recesses 100cc. However, other shapes are also possible for both the protruding pins and the corresponding cavities or recesses such as, for instance, tubular pins and cavities or the like. In the particular embodiment depicted in Figures 4b and 4c the cavities or recesses 100cc are located close to the aperture 100fa on opposite sides thereof; in the same way, the corresponding protruding pins 2pp depicted in Figures 5a and 5b are located close to the locking/unlocking means 2lu on opposite sides thereof. However, it should be appreciated that both the number of the protruding pins and corresponding cavities, as well as their location may be varied or selected according to the circumstances and/or exigencies.

When looking at Figures 4b and 4c, also the way the locking/unlocking means 2lu and the corresponding locking bolt 21b work may be better appreciated. In fact, it appears from Figure 4c that the locking bolt 2lb, in its unlocking position is adapted to pass through the aperture 100fa. On the contrary, in its locking position depicted in dashed lines in Figure 4b, the locking bolt 2lb is not allowed to pass through the aperture 100fa; as explained above, with the locking bolt 21b in its locking position, the seat element 2 may not be removed from the motorcycle 100. In particular, in its locking position, the locking bolt 2lb is received below an edge of the aperture 100fa.

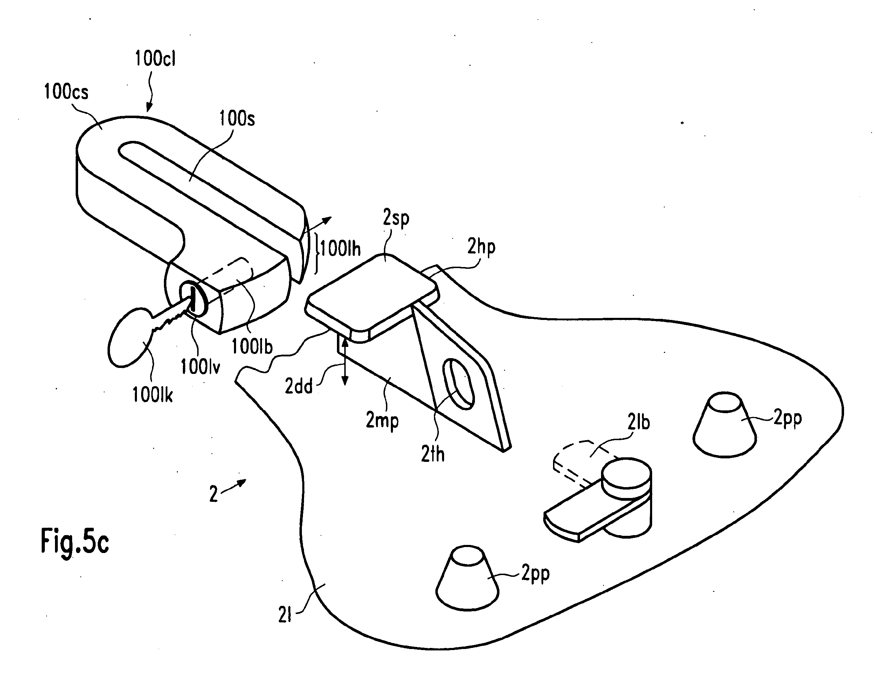

With the following disclosure given with reference to Figures 5a, 5b and 5c, further details and/or features of the seat assembly according to the present invention will be described; as usual, those features in Figures 5a, 5b and 5c which have already been disclosed above with reference to previous figures are identified in Figures 5a, 5b and 5c by the same reference numerals.

In Figure 5c there is in particular depicted a seat element 2 belonging to the seat assembly 1 of the present invention; this seat element 2 is depicted in Figure 5c in its reverse position, i.e. as being turned upside down, with its lower surface 21 facing upwardly. Therefore, it appears from Figure 5c that the seat element 2 depicted therein comprises, in addition to the protruding pins 2pp disclosed above, also a protruding holding portion 2hp extending from said lower surface 2l. In more detail, said protruding holding portion 2hp comprises a main plate or wall 2mp extending from the lower surface 2l of the seat element 2 in a direction substantially perpendicular to said lower surface 21, along with a second plate 2sp extending from said main plate 2mp in a direction substantially perpendicular to said main plate 2mp. The first purpose or function exploited by the protruding holding portion 2hp depicted in Figure 5c (see also Figure 5b) is as follows.

When the seat element 2 depicted in Figure 5c is mounted to the motorcycle 1 as depicted for instance in Figures 1 and 2, i.e. with the lower surface 2l and the seat surface 2u of said seat element 2 facing downward and upward respectively, the protruding holding portion 2hp extends into the area below the seat element 2. Bearing now in mind the disclosure given above with reference to Figure 3, it will be appreciated that a receiving portion 100rc is formed in said area, with said receiving portion 100rc being adapted to receive and house accessories such as tools, a tool bag 100fb or the like. The extension or length of the main plate 2mp of the protruding holding portion 2hp in a direction substantially perpendicular to the lower surface 2l of said seat element 2 may be opportunely selected according to the exigencies and/or circumstances so as to allow in particular the second plate 2sp of said protruding holding portion 2hp to exert a pressure on the tools or accessories 100fb received or arranged in the receiving portion 100rc, once the seat element 2 has been mounted to the motorcycle 100 in the position depicted for instance in Figures 1 and 2. Accordingly, any undesired movement or displacement or even vibration of said accessories 100fb (for instance a tool bag) will be avoided or at least strongly restricted due to the pressure exerted by the second plate 2sp of the protruding holding portion 2hp on said accessories. Any annoying noise due to movement, displacement, vibrations or the like of the accessories 100fb arranged in the receiving portion 100rc will therefore also be avoided or strongly reduced, resulting in improved driving comfort for the driver and/or passenger of the motorcycle 100.

A further function or purpose exploited by the seat element 2 depicted in Figure 5c, in particular by its protruding holding portion 2hp can be summarized as follows. In Figure 5c there is depicted a locking device 100cl (in the following also referred to as cycle lock 100cl). In particular, as apparent from Figure 5c, said cycle lock 100cl comprises a main body 100cs substantially C-shaped, with said main body 100cs defining a slot 100s. The cycle lock 100cl is used for avoiding the motorcycle 100 to be stolen, for instance when said motorcycle is parked or put away in public parking areas, garages or the like. To this end the cycle lock 100cl is put or mounted on a brake disk of the motorcycle (for instance on the front brake disc 100bd depicted in Figure 1) in such a way that at least a portion of said brake disc is received into said slot 100s of said cycle lock 100cl). The width of said slot 100s will therefore approximately corresponding to the thickness of said brake disc 100bd. Furthermore, a locking bolt 1001b of said cycle lock 100cl will be inserted into a corresponding through hole of said brake disc 100bd, for instance into one of the cooling through holes of said brake disc 100bd or into a bolt receiving through hole adapted to this end. Inserting the locking bolt 100lb into said through hole may be achieved acting on a corresponding locking device 100lv by means of a key 100lk or the like. When the need arises to use the motorcycle, for instance when the need arises to drive the motorcycle, the cycle lock 100cl is removed from the brake disk 100bd by unlocking the locking device 100lv by means of the corresponding key 100lk so as to remove the locking bolt 100lb from its receiving through hole, thus removing the cycle lock 100cl from the brake disk 100bd. Therefore, the need arises to arrange or put away the cycle lock 100cl somewhere. The seat element 2 depicted in Figure 2 offers a convenient possibility to put away the cycle lock 100cl. In fact, as depicted in Figures 5c, and 5a, the cycle lock 100cl may be inserted between the second plate 2sp of the protruding holding portion 2hp and the lower surface 2l of the seat element 2. The distance between the second plate 2sp of the protruding holding portion 2hp and the lower surface 2l of the seat element 2 will therefore be selected so as to approximately correspond to the height or thickness 100lh of the cycle lock 100cl. The main plate or wall 2mp of the protruding holding portion 2hp will therefore, be at least partially received into the slot 100s of the cycle lock 100cl in the same way as a portion of the brake disk 100bd is received into said slot 100s when the need arises to lock the motorcycle 100. The reciprocal disposition of the cycle lock 100cl and the protruding holding portion 2hp of the seat element 2 is depicted in particular in Figure 5a. Moreover, the main plate 2mp of the protruding holding portion 2hp of the seat element 2 comprises a through hole 2th, with said through hole 2th being adapted to receive the locking bolt 100lb of the cycle lock 100cl. The possibility is therefore offered to the driver or passenger of the motorcycle 100 to arrange the cycle lock 100cl between the second plate 2sp of the protruding holding portion 2hp and the lower surface 2l of the seat element 2 as explained above, and to further lock the cycle lock 100cl to the main plate 2mp of said protruding holding portion 2hp. In particular to this end, the locking bolt 100lb is inserted into the through hole 2th by actuating the locking device 100lb by means of the key 100lk. The driver or passenger of the motorcycle 100 needs therefore, to care only to put away the key 1001k; however, due to the reduced dimensions of said key 100lk, this mostly reveals to be an easy task since said key may for instance be put away into a pocket or the like. Therefore, there is no risk that the cycle lock is misplaced or even get lost; moreover, the cycle lock is firmly fixed to the main plate 2mp of the protruding holding portion 2hp, so that eventual vibrations of the cycle lock during driving or the like are also avoided, which could otherwise cause annoying noises.

It arises therefore, from the above disclosure that the seat assembly according to the present invention allows the drawbacks affecting the prior art seat assemblies to be overcome or at least to be reduced or minimized. In particular it has been demonstrated with the above disclosure that the seat assembly according to the present invention offers evident advantages in terms of function, design and driving comfort for the driver or passenger. It has in fact been demonstrated that, with the locking/unlocking means being located in the rear end portion of the seat element of the seat assembly, the driver or passenger does not get annoyed by said locking/unlocking means, as it would be the case with locking/unlocking means located in the front end portion (facing towards the fuel tank) of said seat element. It has furthermore been demonstrated that, since the seat element of the seat assembly of the present invention can be alternatively mounted (locked) to and completely removed from the motorcycle by simply actuating the locking/unlocking means with a key, improved handiness and ease of use as of said seat element, as well as improved accessibility to the area of the motorcycle below the seat element are achieved. The access to said area in fact is not obstructed, even not partially, by the seat element or portions thereof as it would be the case with seat elements hinged to the motorcycle. As comprehensively stated above, further advantages of the seat assembly of the present invention relate to the fact that accessories may be conveniently arranged below the seat assembly or even locked or fixed to said seat assembly without any risk of any undesired movement, displacement, vibrations or the like of said accessories during driving, with corresponding evident advantages in terms of comfort for the driver or passenger. The driver or passenger is even not requested to take care of where said accessories, for instance the cycle lock, have to be arranged or put away, in particular during driving.

While the present invention has been described with reference to the particular embodiments depicted in the drawings, it has to be understood that the present invention is not limited to the particular embodiments described but rather that various elements may be introduced into the embodiments described without departing from the scope of the present invention, which is defined by the claims.

For instance, it would appear clear to those skilled in the art that different materials along those known to the skilled person may be selected for realizing or making the seat element; for instance, plastic materials or the like may be selected according to the circumstances, or even metals or metal alloys. Furthermore, the seat element described above may be provided with a cushion or the like for the purpose of improving the comfort of the driver or passenger.

## Claims

1. A seat assembly (1) for a motorcycle (100), said seat assembly (1) comprising a seat element (2) for at least one passenger or driver, said seat element (2) comprising an upper seat surface (2u), a lower surface (21) opposite to said upper seat surface (2u), a front end portion (2fe) facing toward the front portion of said motorcycle (100) and a rear end portion (2re) opposite to said front end portion (2fe), said seat element (2) further comprising connecting means (2c) adapted to be connected to a predefined portion (100r) of said motorcycle (100), and locking/unlocking means (2lu) adapted to allow said seat element (2) to be locked to and unlocked from said motorcycle (100); wherein
said connecting means (2c) are disposed in the front end portion (2fe) of said seat element (2), said locking/unlocking means (2lu) are disposed in said rear end portion (2re) of said seat element (2), and said locking/unlocking means (2lu) are adapted to be actuated from above said upper seat surface (2u) so that said seat element (2) can be alternatively locked to said motorcycle (100) and removed from said motorcycle (100);
**Characterized in that:**
Said seat element (2) further comprises a protruding holding portion (2hp) extending from said lower surface; and **in that**
said protruding holding portion (2hp) is also adapted to hold a predefined tool (100cl) of said motorcycle (100) in a predefined position under said seat element (2) in such a way that, when said locking/unlocking means (2lu) are unlocked and said seat element (2) is removed from said motorcycle (100), said predefined tool (100cl) is kept in said predefined position under said seat element (2) by said protruding holding portion (2hp).

2. An assembly as claimed in claim 1;
**Characterized in that**:
Said protruding holding portion (2hp) is adapted to push on a tool bag (100fb) received in a tool bag receiving cavity (100rc) formed in the frame (100f) of said motorcycle (100) so as to limit movement of said tool bag (100fb) during driving or the like of said motorcycle (100).

3. An assembly as claimed in one of claims 1 and 2;
**Characterized in that**:
Said protruding holding portion (2hp) is adapted to maintain into said predefined position a cycle lock (100cl) of said motorcycle (100) of the kind comprising a substantially C shaped main body (100cs) with a slot (100s) adapted to receive a portion of a brake disk (100bd) of said motorcycle (100) so as to be locked on said brake disk (100db) of said motorcycle (100).

4. An assembly as claimed in claim 3;
**Characterized in that**:
Said protruding holding portion (2hp) of said seat element(2) comprises a main plate or wall (2mp) extending from said lower surface (21) of said seat element (2) and having a thickness substantially corresponding to that of said brake disk (100bd), so that said main plate (2mp) can be received into said slot (100s) of said cycle lock (100cl) like said portion of said brake disk (100bd) is received into said slot (100s).

5. An assembly as claimed in claim 4;
**Characterized in that**:
Said protruding holding portion (2hp) of said seat element (2) further comprises a second plate (2sp) extending from said main plate (2mp) in a direction substantially perpendicular with respect to said main plate (2mp) so that said cycle lock (100cl) can be maintained in said predefined position between said second plate (2sp) and said lower surface (21) of said seat element (2).

6. An assembly as claimed in claim 5;
**Characterized in that:**
Said main plate (2mp) further comprises a through hole (2th) adapted to receive a locking bolt (100lb) of said cycle lock (100cl).

7. An assembly as claimed in one of claims 1 to 6;
**Characterized in that:**
Said connecting means (2c) comprise a protruding portion (2cp) facing toward the front portion of said motorcycle (100) and adapted to be received in a corresponding receiving portion (100rp) of said motorcycle (100), so that unlocking said locking/unlocking means (2lu) allows said seat element (2) to be removed from said motorcycle (100).

8. An assembly as claimed in claim 7;
**Characterized in that:**
Said protruding portion (2cp) is adapted to be received in a corresponding receiving portion (100rp) defined by the fuel tank (100t) of said motorcycle (100).

9. An assembly as claimed in claim 7;
**Characterized in that:**
Said protruding portion (2cp) is adapted to be received in a corresponding receiving portion (100rp) formed in the frame (100f) of said motorcycle (100).

10. An assembly as claimed in one of claims 1 to 9;
**Characterized in that:**
Said front end portion (2fe) of said seat element (2) comprises a curved portion (2fc) having a shape adapted to match with the shape of the rear end portion of the fuel tank (100t) of said motorcycle (100).

11. An assembly as claimed in claim 10;
**Characterized in that:**
Said curved portion (2fc) is substantially U shaped and **in that** said connecting means (2c) are disposed under said curved portion (2fc).

12. An assembly as claimed in one of claims 1 to 11;
**Characterized in that:**
Said locking/unlocking means (2lu) are adapted to cooperate with a further portion (100fp) of the frame (100f) of said motorcycle (100) disposed under said seat element (2).

13. An assembly as claimed in claim 12;
**Characterized in that:**
Said locking/unlocking means (2lu) comprise a rotatable locking/unlocking bolt (21b) adapted to be locked to and unlocked from a corresponding aperture (100fa) formed in said further portion (100fp) of said frame (100f) of said motorcycle (100).

14. An assembly as claimed in claim 13;
**Characterized in that:**
Said locking/unlocking bolt (2lb) is adapted to be operated by means of a key (2k).

15. An assembly as claimed in one of claims 12 to 14;
**Characterized in that:**
Said seat element (2) further comprises at least one protruding pin (2pp) of a predefined shape extending from said lower surface (21) of said seat element (2) and adapted to be received in a corresponding receiving cavity (100cc) formed in said further portion (100fp) of said frame (100f) of said motorcycle (100) once said seat element (2) has been locked to said motorcycle (100), said corresponding receiving cavity (100cc) having a shape adapted to match that of said at least one protruding pin (2pp), said protruding pin (2pp) and said corresponding receiving cavity (100cc), in combination, allowing said seat element (2) to be firmly kept in its locked position.

16. An assembly as claimed in claim 15;
**Characterized in that:**
Said at least one protruding pin (2pp) has a substantially truncated conical shape

17. An assembly as claimed in one of claims 15 and 16;
**Characterized in that:**
Said at least one protruding pin (2pp) is disposed in said rear end portion (2re) of said seat element (2) in proximity of said locking/unlocking means (2lu).

18. An assembly as claimed in one of claims 16 to 17;
**Characterized in that:**
Said seat element (2) comprises at least two protruding pins (2pp) extending from said lower surface (21) and adapted to be received into two corresponding receiving cavities (100cc) formed in said further portion (100fp) of said frame (100f).

19. An assembly as claimed in claim 18;
**Characterized in that:**
Said at least two protruding pins (2pp) are disposed on the right and the left side, respectively, of said locking/unlocking means (2lu).

20. A motorcycle (100) comprising a fuel tank (100t) and a main frame (100f);
**Characterized in that:**
Said motorcycle (100) comprises a seat assembly (1) as claimed in one of claims 1 to 19.

21. A Motorcycle as claimed in claim 20;
**Characterized in that:**
said fuel tank (100t) comprises a rear end portion defining a receiving portion (100rp) adapted to receive said connecting means (2c) of said seat element (2).

22. A motorcycle as claimed in claim 20;
**Characterized in that:**
In said main frame (100f) of said motorcycle (100) there is formed a receiving portion (100rp) adapted to receive said connecting means (2c) of said seat element (2).

23. A motorcycle as claimed in one of claims 20 to 22;
**Characterized in that:**
Said motorcycle (100) is a two wheeled motorcycle.

24. A motorcycle as claimed in one of claims 20 to 22;
**Characterized in that:**
Said motorcycle (100) is a three wheeled motorcycle.

## Patentansprüche

1. Sitzanordnung (1) für ein Motorrad (100), wobei die Sitzanordnung (1) ein Sitzelement (2) für wenigstens einen Sozius oder Fahrer umfasst, das Sitzelement (2) eine obere Sitzfläche (2u), eine untere Fläche (21), die der oberen Sitzfläche (2u) gegenüberliegt, einen vorderen Endabschnitt (2fe), der dem vorderen Abschnitt des Motorrades (100) zugewandt ist, und einen hinteren Endabschnitt (2re) umfasst, der dem vorderen Endabschnitt (2fe) gegenüberliegt, wobei das Sitzelement (2) des Weiteren eine Verbindungseinrichtung (2c), die so eingerichtet ist, dass sie mit einem vordefinierten Abschnitt (100r) des Motorrades (100) verbunden ist, sowie eine Arretier-/Entarretiereinrichtung (2lu) umfasst, die so eingerichtet ist, dass sie zulässt, dass das Sitzelement (2) an dem Motorrad (100) arretiert und von ihm entarretiert wird; wobei
die Verbindungseinrichtungen (2c) in dem vorderen Endabschnitt (2fe) des Sitzelementes (2) angeordnet sind, die Arretier-/Entarretiereinrichtung (2lu) in dem hinteren Endabschnitt (2re) des Sitzelementes (2) angeordnet ist und die Arretier-/Entarretiereinrichtung (2lu) so eingerichtet ist, dass sie von oberhalb der oberen Sitzfläche (2u) betätigt wird, so dass das Sitzelement (2) alternativ an dem Motorrad (100) arretiert und von dem Motorrad (100) entfernt werden kann;
**dadurch gekennzeichnet, dass**:
das Sitzelement (2) des Weiteren einen vorstehenden Halteabschnitt (2hp) umfasst, der sich von der unteren Fläche aus erstreckt; und dadurch, dass
der vorstehende Halteabschnitt (2hp) des Weiteren so eingerichtet ist, dass ein vordefiniertes Werkzeug (100cl) des Motorrades (100) an einer vordefinierten Position unter dem Sitzelement (2) so hält, dass, wenn die Arretier-/Entarretiereinrichtung (2lu) entarretiert wird und das Sitzelement (2) von dem Motorrad (100) entfernt wird, das vordefinierte Werkzeug (100cl) durch den vorstehenden Halteabschnitt (2hp) an der vordefinierten Position unter dem Sitzelement (2) gehalten wird.

2. Anordnung nach Anspruch 1;
**dadurch gekennzeichnet, dass**
der vorstehende Halteabschnitt (200hp) so eingerichtet ist, dass er auf eine Werkzeugtasche (100fb) drückt, die in einem Werkzeugtaschen-Aufnahmehohlraum (100rc) aufgenommen ist, der in dem Rahmen (100f) des Motorrades (100) ausgebildet ist, um so Bewegung der Werkzeugtasche (100fb) beim Fahren des Motorrades (100) oder dergleichen einzuschränken.

3. Anordnung nach einem der Ansprüche 1 und 2;
**dadurch gekennzeichnet, dass**
der vorstehende Halteabschnitt (2hp) so eingerichtet ist, dass er ein Motorradschloss (100cl) des Motorrades (100) des Typs, der einen im Wesentlichen C-förmigen Hauptkörper (100cs) mit einem Schlitz (100s) umfasst, der einen Abschnitt einer Bremsscheibe (100bd) des Motorrades (100) aufnimmt, um es an der Bremsscheibe (bd) des Motorrades (100) zu verriegeln, an der vordefinierten Position hält.

4. Anordnung nach Anspruch 3;
**dadurch gekennzeichnet, dass**
der vorstehende Halteabschnitt (2hp) des Sitzelementes (2) eine Hauptplatte bzw. -wand (2mp) umfasst, die sich von der unteren Fläche (2l) des Sitzelementes (2) aus erstreckt und eine Dicke hat, die im Wesentlichen der der Bremsscheibe (100bd) entspricht, so dass die Hauptplatte (2mp) in dem Schlitz (100s) des Motorradschlosses (100cl) so aufgenommen werden kann, wie der Abschnitt der Bremsscheibe (100bd) in dem Schlitz (100s) aufgenommen wird.

5. Anordnung nach Anspruch 4;
**dadurch gekennzeichnet, dass**
der vorstehende Halteabschnitt (2hp) des Sitzelementes (2) des Weiteren eine zweite Platte (2sp) umfasst, die sich von der Hauptplatte (2mp) in einer Richtung im Wesentlichen senkrecht in Bezug auf die Hauptplatte (2mp) erstreckt, so dass das Motorradschloss (100cl) an der vordefinierten Position zwischen der zweiten Platte (2sp) und der unteren Fläche (2l) des Sitzelementes (2) gehalten werden kann.

6. Anordnung nach Anspruch 5,
**dadurch gekennzeichnet, dass**
die Hauptplatte (2mp) des Weiteren ein Durchgangsloch (2th) umfasst, das so eingerichtet ist, dass es einen Schließbolzen (100lb) des Motorradschlosses (100cl) aufnimmt.

7. Anordnung nach einem der Ansprüche 1 bis 6,
**dadurch gekennzeichnet, dass**:
die Verbindungseinrichtung (2c) einen vorstehenden Abschnitt (2cp) umfasst, der dem vorderen Abschnitt des Motorrades (100) zugewandt und so eingerichtet ist, dass er in einem entsprechenden Aufnahmeabschnitt (100rp) des Motorrades (100) aufgenommen wird, so dass Entarretieren der Arretier-/Entarretiereinrichtung (2lu) Entfernen des Sitzelementes (2) von dem Motorrad (100) zulässt.

8. Anordnung nach Anspruch 7,
**dadurch gekennzeichnet, dass**
der vorstehende Abschnitt (2cp) so eingerichtet ist, dass er in einem entsprechenden Aufnahmeabschnitt (100rp) aufgenommen wird, der durch den Kraftstofftank (100t) des Motorrades (100) gebildet wird.

9. Anordnung nach Anspruch 7,
**dadurch gekennzeichnet, dass**:
der vorstehende Abschnitt (2cp) so eingerichtet ist, dass er in einem entsprechenden Aufnahmeabschnitt (100rp) aufgenommen wird, der in dem Rahmen (100f) des Motorrades (100) ausgebildet ist.

10. Anordnung nach einem der Ansprüche 1 bis 9,
**dadurch gekennzeichnet, dass**:
der vordere Endabschnitt (2fe) des Sitzelementes (2) einen gekrümmten Abschnitt (2fc) umfasst, der eine Form hat, die so eingerichtet ist, dass sie der Form des hinteren Abschnitts des Kraftstofftanks (100t) des Motorrades (100) entspricht.

11. Anordnung nach Anspruch 10,
**dadurch gekennzeichnet, dass**:
der gekrümmte Abschnitt (2fc) im Wesentlichen U-förmig ist, und dadurch, dass die Verbindungseinrichtung (2c) unter dem gekrümmten Abschnitt (2fc) angeordnet ist.

12. Anordnung nach einem der Ansprüche 1 bis 11,
**dadurch gekennzeichnet, dass**:
die Arretier-/Entarretiereinrichtung (2lu) so eingerichtet ist, dass sie mit einem weiteren Abschnitt (100fp) des Rahmens (100f) des Motorrades (100) zusammenwirkt, der unter dem Sitzelement (2) angeordnet ist.

13. Anordnung nach Anspruch 12,
**dadurch gekennzeichnet, dass**
die Arretier-/Entarretiereinrichtung (2lu) einen drehbaren Arretier-/Entarretierbolzen (2lb) umfasst, der so eingerichtet ist, dass er in einer entsprechenden Öffnung (100fa), die in dem weiteren Abschnitt (100fp) des Rahmens (100f) des Motorrades (100) ausgebildet ist, arretiert und aus ihr entarretiert werden kann.

14. Anordnung nach Anspruch 13,
**dadurch gekennzeichnet, dass**:
der Arretier-/Entarretierbolzen (2lb) so eingerichtet ist, dass er mittels eines Schlüssels (200k) betätigt wird.

15. Anordnung nach einem der Ansprüche 12 bis 14,
**dadurch gekennzeichnet, dass**:
das Sitzelement (2) des Weiteren wenigstens einen vorstehenden Stift (2pp) einer vordefinierten Form umfasst, der sich von der unteren Fläche (21) des Sitzelementes (2) aus erstreckt und so eingerichtet ist, dass er in einem entsprechenden Aufnahmehohlraum (100cc) aufgenommen wird, der in dem weiteren Abschnitt (100fp) des Rahmens (100f) des Motorrades (100) ausgebildet ist, wenn das Sitzelement (2) an dem Motorrad (100) arretiert worden ist, wobei der entsprechende Aufnahmehohlraum (100cc) eine Form hat, die so eingerichtet ist, dass sie der des wenigstens einen vorstehenden Stiftes (2pp) entspricht, wobei der vorstehende Stift (2pp) und der entsprechende Aufnahmehohlraum (100cc) in Kombination zulassen, dass das Sitzelement (2) fest in seiner arretierten Position gehalten wird.

16. Anordnung nach Anspruch 15,
**dadurch gekennzeichnet, dass**:
der wenigstens eine vorstehende Stift (2pp) eine im Wesentlichen kegelstumpfartige Form hat.

17. Anordnung nach einem der Ansprüche 15 und 16,
**dadurch gekennzeichnet, dass**:
der wenigstens eine vorstehende Stift (2pp) in dem hinteren Endabschnitt (2re) des Sitzelementes (2) nahe an der Arretier-/Entarretiereinrichtung (2lu) angeordnet ist.

18. Anordnung nach einem der Ansprüche 16 bis 17,
**dadurch gekennzeichnet, dass**:
das Sitzelement (2) wenigstens zwei vorstehende Stifte (2pp) umfasst, die sich von der unteren Fläche (21) aus erstrecken und so eingerichtet sind, dass sie in zwei entsprechenden Aufnahmehohlräumen (100cc) aufgenommen werden, die in dem weiteren Abschnitt (100fb) des Rahmens (100f) ausgebildet sind.

19. Anordnung nach Anspruch 18,
**dadurch gekennzeichnet, dass**
die wenigstens zwei vorstehenden Stifte (2pp) auf der rechten bzw. linken Seite der Arretier-/Entarretiereinrichtung (2lu) angeordnet sind.

20. Motorrad (100), das einen Kraftstofftank (100t) und einen Hauptrahmen (100f) umfasst,
**dadurch gekennzeichnet, dass**:
das Motorrad (100) eine Sitzanordnung (1) nach einem der Ansprüche 1 bis 19 umfasst.

21. Motorrad nach Anspruch 20;
**dadurch gekennzeichnet, dass**:
der Kraftstofftank (100t) einen hinteren Endabschnitt umfasst, der einen Aufnahmeabschnitt (100rp) aufweist, der so eingerichtet ist, dass er die Verbindungseinrichtung (2c) des Sitzelementes (2) aufnimmt.

22. Motorrad nach Anspruch 20,
**dadurch gekennzeichnet, dass**:
in dem Hauptrahmen (100f) des Motorrades (100) ein Aufnahmeabschnitt (100rp) ausgebildet ist, der so eingerichtet ist, dass er die Verbindungseinrichtung (2c) des Elementes (2) aufnimmt.

23. Motorrad nach einem der Ansprüche 20 bis 22,
**dadurch gekennzeichnet, dass**:
das Motorrad (100) ein zweirädriges Motorrad ist.

24. Motorrad nach einem der Ansprüche 20 bis 22,
**dadurch gekennzeichnet, dass**:
das Motorrad (100) ein dreirädriges Motorrad ist.

## Revendications

1. Ensemble de siège (1) pour un motocycle (100), ledit ensemble de siège (1) comprenant un élément de siège (2) pour au moins un passager ou conducteur, ledit élément de siège (2) comprenant une surface de siège supérieure (2u), une surface inférieure (21) opposée à ladite surface de siège supérieure (2u), une partie d'extrémité avant (2fe) tournée vers la partie avant dudit motocycle (100) et une partie d'extrémité arrière (2re) opposée à ladite partie d'extrémité avant (2fe), ledit élément de siège (2) comprenant en outre des moyens de liaison (2c) adaptés pour être reliés à une partie prédéfinie (100r) dudit motocycle (100), et des moyens de verrouillage/déverrouillage (2lu) adaptés pour permettre audit élément de siège (2) d'être verrouillé audit et déverrouillé dudit motocycle (100) ; dans lequel
lesdits moyens de liaison (2c) sont disposés dans la partie d'extrémité avant (2fe) dudit élément de siège (2), lesdits moyens de verrouillage/déverrouillage (2lu) sont disposés dans ladite partie d'extrémité arrière (2re) dudit élément de siège (2), et lesdits moyens de verrouillage/déverrouillage (2lu) sont adaptés pour être actionnés à partir du dessus de ladite surface de siège supérieure (2u) de sorte que ledit élément de siège (2) puisse être alternativement verrouillé audit motocycle (100) et retiré dudit motocycle (100) ;
**caractérisé en ce que** :
ledit élément de siège (2) comprend en outre une partie de retenue saillante (2hp) s'étendant à partir de ladite surface inférieure ; et **en ce que**
ladite partie de retenue saillante (2hp) est également adaptée pour retenir un outil prédéfini (100cl) dudit motocycle (100) dans une position prédéfinie sous ledit élément de siège (2) de manière telle que, lorsque lesdits moyens de verrouillage/déverrouillage (2lu) sont déverrouillés et ledit élément de siège (2) est retiré dudit motocycle (100), ledit outil prédéfini (100cl) soit maintenu dans ladite position prédéfinie sous ledit élément de siège (2) par ladite partie de retenue saillante (2hp).

2. Ensemble selon la revendication 1,
**caractérisé en ce que**
ladite partie de retenue saillante (2hp) est adaptée pour pousser sur un sac à outil (100fb) reçu dans une cavité de réception de sac à outil (100rc) formée dans le cadre (100f) dudit motocycle (100) afin de limiter le mouvement dudit sac à outil (100fb) au cours de la conduite ou analogue dudit motocycle (100).

3. Ensemble selon une des revendications 1 et 2,
**caractérisé en ce que**
ladite partie de retenue saillante (2hp) est adaptée pour maintenir dans ladite position prédéfinie un verrou de cycle (100cl) dudit motocycle (100) du type comprenant un corps principal sensiblement en forme de C (100cs) avec une fente (100s) adaptée pour recevoir une partie d'un disque de frein (100bd) dudit motocycle (100) afin d'être verrouillée sur ledit disque de frein (100db) dudit motocycle (100).

4. Ensemble selon la revendication 3,
**caractérisé en ce que**
ladite partie de retenue saillante (2hp) dudit élément de siège(2) comprend une plaque principale ou paroi (2mp) s'étendant à partir de ladite surface inférieure (21) dudit élément de siège (2) et possédant une épaisseur correspondant sensiblement à celle dudit disque de frein (100bd), de sorte que ladite plaque principale (2mp) puisse être reçue dans ladite fente (100s) dudit verrou de cycle (100cl) comme ladite partie dudit disque de frein (100bd) est reçue dans ladite fente (100s).

5. Ensemble selon la revendication 4,
**caractérisé en ce que**
ladite partie de retenue saillante (2hp) dudit élément de siège (2) comprend en outre une seconde plaque (2sp) s'étendant à partir de ladite plaque principale (2mp) dans une direction sensiblement perpendiculaire par rapport à ladite plaque principale (2mp) de sorte que ledit verrou de cycle (100cl) puisse être maintenu dans ladite position prédéfinie entre ladite seconde plaque (2sp) et ladite surface inférieure (21) dudit élément de siège (2).

6. Ensemble selon la revendication 5,
**caractérisé en ce que**
ladite plaque principale (2mp) comprend en outre un trou de passage (2th) adapté pour recevoir un boulon de verrouillage (100lb) dudit verrou de cycle (100cl).

7. Ensemble selon une des revendications 1 à 6,
**caractérisé en ce que**
lesdits moyens de liaison (2c) comprennent une partie saillante (2cp) tournée vers la partie avant dudit motocycle (100) et adaptée pour être reçue dans une partie de réception correspondante (100rp) dudit motocycle (100), de sorte que le déverrouillage desdits moyens de verrouillage/déverrouillage (2lu) permette audit élément de siège (2) d'être retiré dudit motocycle (100).

8. Ensemble selon la revendication 7,
**caractérisé en ce que**
ladite partie saillante (2cp) est adaptée pour être reçue dans une partie de réception correspondante (100rp) définie par le réservoir de carburant (100t) dudit motocycle (100).

9. Ensemble selon la revendication 7,
**caractérisé en ce que**
ladite partie saillante (2cp) est adaptée pour être reçue dans une partie de réception correspondante (100rp) formée dans le cadre (100f) dudit motocycle (100).

10. Ensemble selon une des revendications 1 à 9,
**caractérisé en ce que**
ladite partie d'extrémité avant (2fe) dudit élément de siège (2) comprend une partie incurvée (2fc) possédant une forme adaptée pour correspondre à la forme de la partie d'extrémité arrière du réservoir de carburant (100t) dudit motocycle (100).

11. Ensemble selon la revendication 10,
**caractérisé en ce que**
ladite partie incurvée (2fc) présente une forme sensiblement de U et **en ce que** lesdits moyens de liaison (2c) sont disposés sous ladite partie incurvée (2fc).

12. Ensemble selon une des revendications 1 à 11,
**caractérisé en ce que**
lesdits moyens de verrouillage/déverrouillage (2lu) sont adaptés pour coopérer avec une partie supplémentaire (100fp) du cadre (100f) dudit motocycle (100) disposée sous ledit élément de siège (2).

13. Ensemble selon la revendication 12,
**caractérisé en ce que**
lesdits moyens de verrouillage/déverrouillage (2lu) comprennent un boulon de verrouillage/déverrouillage rotatif (2lb) adapté pour être verrouillé à une et déverrouillé d'une ouverture correspondante (100fa) formée dans ladite partie supplémentaire (100fp) dudit cadre (100f) dudit motocycle (100).

14. Ensemble selon la revendication 13,
**caractérisé en ce que**
ledit boulon de verrouillage/déverrouillage (2lb) est adapté pour être actionné au moyen d'une clef (2k).

15. Ensemble selon une des revendications 12 à 14,
**caractérisé en ce que**
ledit élément de siège (2) comprend en outre au moins une goupille saillante (2pp) d'une forme prédéfinie s'étendant à partir de ladite surface inférieure (21) dudit élément de siège (2) et adaptée pour être reçue dans une cavité de réception correspondante (100cc) formée dans ladite partie supplémentaire (100fp) dudit cadre (100f) dudit motocycle (100) une foie que ledit élément de siège (2) a été verrouillé audit motocycle (100), ladite cavité de réception correspondante (100cc) possédant une forme adaptée pour correspondre à celle de ladite au moins une goupille saillante (2pp), ladite goupille saillante (2pp) et ladite cavité de réception correspondante (100cc) permettant, en association, audit élément de siège (2) d'être fermement maintenu dans sa position verrouillée.

16. Ensemble selon la revendication 15,
**caractérisé en ce que**
ladite au moins une goupille saillante (2pp) possède une forme conique sensiblement tronquée.

17. Ensemble selon une des revendications 15 et 16,
**caractérisé en ce que**
ladite au moins une goupille saillante (2pp) est disposée dans ladite partie d'extrémité arrière (2re) dudit élément de siège (2) à proximité desdits moyens de verrouillage/déverrouillage (21u).

18. Ensemble selon une des revendications 16 à 17,
**caractérisé en ce que**
ledit élément de siège (2) comprend au moins deux goupilles saillantes (2pp) s'étendant à partir de ladite surface inférieure (21) et adaptées pour être reçues dans deux cavités de réception correspondantes (100cc) formées dans ladite partie supplémentaire (100fp) dudit cadre (100f).

19. Ensemble selon la revendication 18,
**caractérisé en ce que**
lesdites au moins deux goupilles saillantes (2pp) sont disposées sur les côtés droit et gauche, respectivement, desdits moyens de verrouillage/déverrouillage (2lu).

20. Motocycle (100) comprenant un réservoir de carburant (100t) et un cadre principal (100f),
**caractérisé en ce que**
ledit motocycle (100) comprend un ensemble de siège (1) selon une des revendications 1 à 19.

21. Motocycle selon la revendication 20,
**caractérisé en ce que**
ledit réservoir de carburant (100t) comprend une partie d'extrémité arrière définissant une partie de réception (100rp) adaptée pour recevoir lesdits moyens de liaison (2c) dudit élément de siège (2).

22. Motocycle selon la revendication 20,
**caractérisé en ce**
**qu'**une partie de réception (100rp) adaptée pour recevoir lesdits moyens de liaison (2c) dudit élément de siège (2) est formée dans ledit cadre principal (100f) dudit motocycle (100).

23. Motocycle selon une des revendications 20 à 22,
**caractérisé en ce que**
ledit motocycle (100) est un motocycle à deux roues.

24. Motocycle selon une des revendications 20 à 22,
**caractérisé en ce que**
ledit motocycle (100) est un motocycle à trois roues.
